# EUROPEAN PATENT APPLICATION

(11) **EP 4 672 820 A1**
(43) Date of publication of application: **31.12.2025**
(21) Application number: 23924065.8
(22) Date of filing: 22.02.2023
(51) Int. Cl.: H04W 36/02, H04W 76/12, H04W 92/20

(54) **NETWORK NODE AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SAWADA, Masahiro, Tokyo 100-6150 (JP); MUTIKAINEN, Jari, 80687 Munich (DE)
(74) Representative: Hoffmann Eitle
(86) International application number: PCT/JP2023/006588
(87) International publication number: WO 2024/176413

(57) **Abstract**

A network node includes: a reception unit configured to receive a PDCP (Packet Data Convergence Protocol) bearer context modification request including information indicating a TN (Transport Network) path setup complete from a first network node during execution of a handover procedure; and a transmission unit configured to transfer user data to a destination of a second network node via the TN path by using a user plane protocol.

## Description

### TECHNICAL FIELD

The present invention relates to a network node and a communication method in a communication system.

### BACKGROUND ART

In 3GPP (registered trademark) (3rd Generation Partnership Project), in order to realize even larger system capacity, even faster data transmission speeds, even lower latency in a wireless communication section, etc., a wireless communication method called "5G" or "NR (New Radio)" is being discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g., Non-Patent Literature 1).

In addition, with respect to the future network architecture, discussions are being held on: an innovation of the U-plane (User Plane) transport network; a mechanism that allows future independent development of functions related to the transport network; a mechanism for the mobile communication carriers to select functions related to the transport network from options; and the like.

### CITATION LIST

### Non-Patent Literature

Non-Patent Literature 1: 3GPP TS 23.501 V17.7.0 (2022-12)
Non-Patent Literature 2: 3GPP TS 38.401 V17.3.0 (2022-12)
Non-Patent Literature 3: 3GPP TS 23.502 V17.7.0 (2022-12)
Non-Patent Literature 4: 3GPP TS 29.244 V17.7.1 (2022-12)
Non-Patent Literature 5: 3GPP TS 38.413 V17.3.0 (2022-12)
Non-Patent Literature 6: 3GPP TS 37.483 V17.3.0 (2022-12)
Non-Patent Literature 7: 3GPP TR 23.700-25 V2.0.0 (2022-11)
Non-Patent Literature 8: IOWN GF System and Technology Outlook (2021-04)
Non-Patent Literature 9: 3GPP TS 38.473 V17.3.0 (2022-12)
Non-Patent Literature 10: 3GPP TS 38.423 V17.3.0 (2022-12)
Non-Patent Literature 11: 3GPP TS 38.425 V17.2.0 (2022-12)

### SUMMARY OF INVENTION

### TECHNICAL PROBLEM

With respect to the U-plane transport network, discussions are being held on: utilization of SRv6 (Segment Routing Ipv6); utilization of the optical transportation network using the photoelectric conversion; and the like, instead of using the GTP-U (GPRS Tunnelling Protocol for User Plane) as in the conventional way. However, with the current configuration, independent development or selection of functions related to the transport network cannot be achieved.

The present invention has been made in view of the above points, and it is an object of the present invention to introduce a generic TN (Transport Network) system.

### SOLUTION TO PROBLEM

According to the disclosed technique, a network node is provided. The network node includes: a reception unit configured to receive a PDCP (Packet Data Convergence Protocol) bearer context modification request including information indicating a TN (Transport Network) path setup complete from a first network node during execution of a handover procedure; and a transmission unit configured to transfer user data to a destination of a second network node via the TN path by using a user plane protocol.

### ADVANTAGEOUS EFFECTS OF INVENTION

According to the disclosed technique, a generic TN (Transport Network) system can be introduced.

### BRIEF DESCRIPTION OF DRAWINGS

[Fig. 1] is a drawing for describing an example of a communication system.
[Fig. 2] is a drawing for describing an example of a communication system under a roaming environment.
[Fig. 3] is a drawing for describing an example (1) of a network architecture.
[Fig. 4] is a drawing for describing an example (2) of a network architecture.
[Fig. 5] is a drawing for describing an example (1) of a network architecture in an embodiment of the present invention.
[Fig. 6] is a drawing for describing an example (2) of a network architecture in an embodiment of the present invention.
[Fig. 7] is a drawing for describing an example (1) of a generic TN system in an embodiment of the present invention.
[Fig. 8] is a drawing for describing an example (2) of a generic TN system in an embodiment of the present invention.
[Fig. 9] is a drawing for describing an example (3) of a generic TN system in an embodiment of the present invention.
[Fig. 10] is a sequence diagram for describing an example of starting the PDU session establishment in an embodiment of the present invention.
[Fig. 11] is a sequence diagram for describing an example of TN path setup in a case of a GTP-U specific TN system in an embodiment of the present invention.
[Fig. 12] is a sequence diagram for describing an example of TN path setup in a case of a TSN specific TN system in an embodiment of the present invention.
[Fig. 13] is a sequence diagram for describing an example of TN path setup in a case of a APN specific TN system in an embodiment of the present invention.
[Fig. 14] is a sequence diagram for describing an example of PDU session establishment complete in an embodiment of the present invention.
[Fig. 15] is a sequence diagram for describing an example (1) of a handover in an embodiment of the present invention.
[Fig. 16] is a sequence diagram for describing an example (2) of a handover in an embodiment of the present invention.
[Fig. 17] is a sequence diagram for describing an example (3) of a handover in an embodiment of the present invention.
[Fig. 18] is a sequence diagram for describing an example (1) of a message in an embodiment of the present invention.
[Fig. 19] is a sequence diagram for describing an example (2) of a message in an embodiment of the present invention.
[Fig. 20] is a drawing illustrating an example of a frame format in an embodiment of the present invention.
[Fig. 21] is drawing illustrating an example of a functional structure of a base station 10 and a network node 30 in an embodiment of the present invention.
[Fig. 22] is a drawing illustrating an example of a functional configuration of a terminal 20 in an embodiment of the present invention.
[Fig. 23] is a drawing illustrating an example of a hardware structure of the base station 10 and the terminal 20 in an embodiment of the present invention.
[Fig. 24] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Further, in an embodiment of the present invention, the expression, radio parameters are "configured" may mean that a predetermined value is pre-configured, or may mean that a radio parameter indicated by a network node 30 or a terminal 20 is configured.

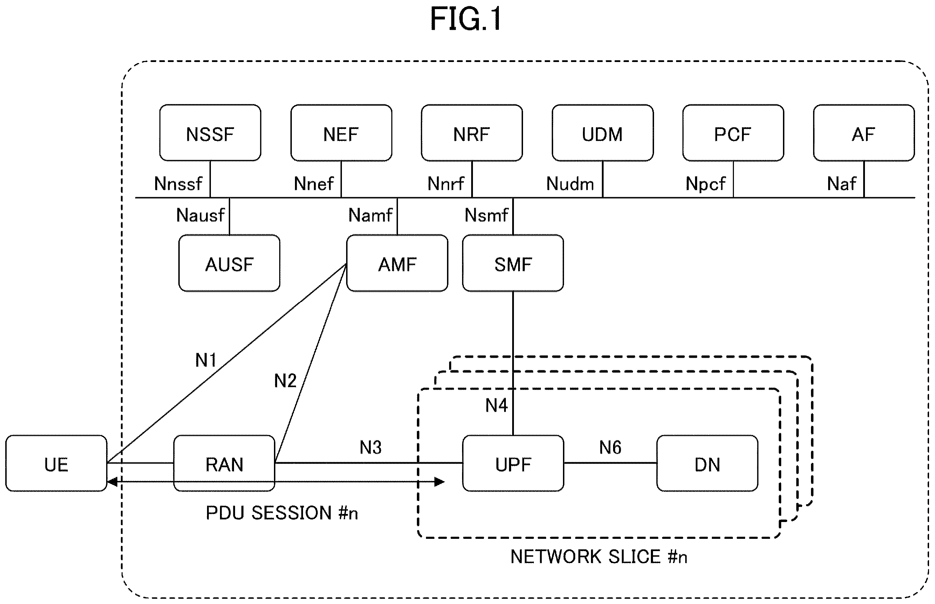

Fig. 1 is a drawing illustrating an example of a communication system. As illustrated in Fig. 1, the communication system includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN (Radio Access Network) is a network node 30 with wireless access functions, may include a base station 10, and is connected to UE, AMF (Access and Mobility Management Function) and UPF (User plane function). The AMF is a network node 30 having functions of, for example, terminating the RAN interface, terminating the NAS (Non-Access Stratum), managing registration, managing connection, managing reachability, and managing mobility. The UPF is a network node 30 interconnected with a DN (Data Network), and has functions such as a PDU (Protocol Data Unit) session point to an external unit, routing and forwarding packets, and QoS (Quality of Service) handling of the user plane. UPF and DN are included in a network slice. In a wireless communication network in an embodiment of the present invention, multiple network slices are included.

AMF is connected to UE, RAN, SMF (Session Management Function), NSSF (Network Slice Selection Function), NEF (Network Exposure Function), NRF (Network Repository Function), UDM (Unified Data Management), AUSF (Authentication Server Function), PCF (Policy Control Function), and AF (Application Function). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, and Naf based on the respective services.

The SMF is a network node 30 having functions such as session management, Internet Protocol (IP) address assignment and management of UE, DHCP (Dynamic Host Configuration Protocol) function, ARP (Address Resolution Protocol) proxy, and a roaming function. The NEF is a network node 30 having a function of indicating capabilities and events to other NFs (Network Functions). The NSSF is a network node 30 having functions of, for example, selecting the network slice to which the UE is to be connected, determining the allowed NSSAI (Network Slice Selection Assistance Information), determining the configured NSSAI, and determining the AMF set to which the UE is to be connected. PCF is a network node 30 having a function of performing policy control of the network. AF is a network node 30 having a function of controlling an application server. NRF is a network node 30 having a function of discovering NF instances which provide services. UDM is a network node 30 that manages subscriber data and authentication data. UDM is connected to a UDR (User Data Repository) that stores the above-described data.

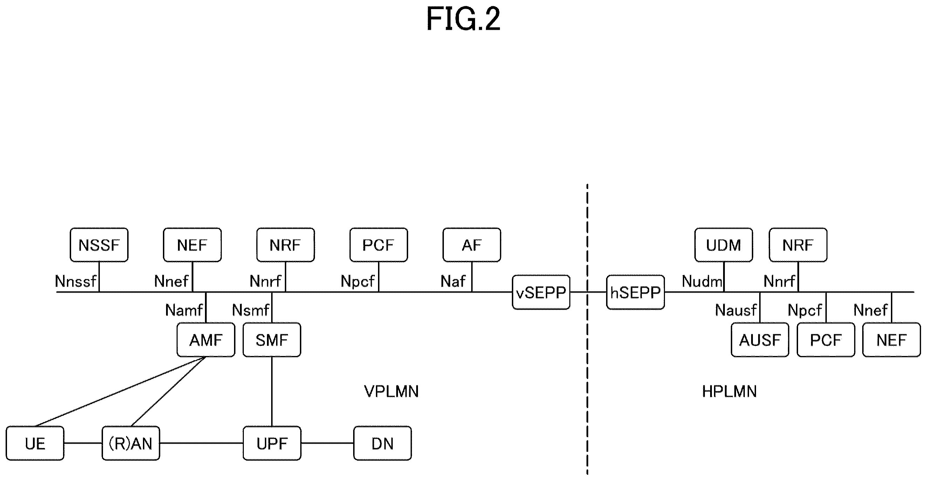

Fig. 2 is a drawing illustrating an example of a communication system under a roaming environment. As illustrated in Fig. 2, the network includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN is a network node 30 having a wireless access function, and is connected to UE, AMF, and UPF. AMF is a network node 30 having functions of terminating the RAN interface, terminating NAS, managing registration, managing connection, managing reachability, managing mobility, and the like. UPF is a network node 30 having functions of PDU session point to an external unit mutually connected to DN, routing and forwarding of packets, QoS handling of the user plane, and the like. UPF and DN are included in a network slice. In a wireless communication network in an embodiment of the present invention, multiple network slices are included.

AMF is connected to UE, RAN, SMF, NSSF, NEF, NRF, UDM, AUSF, PCF, AF, and SEPP (Security Edge Protection Proxy). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, and Naf based on the respective services.

SMF is a network node 30 having functions such as session management, IP address assignment and management for UE, a DHCP function, an ARP proxy, and a roaming function. NEF is a network node 30 having a function of indicating capabilities and events to other NFs. NSSF is a network node 30 having functions of selecting the network slice to which the UE is to be connected, determining NSSAI to be allowed, determining NSSAI to be configured, determining AMF set to which the UE is to be connected, and the like. PCF is a network node 30 having a function of performing policy control of the network. AF is a network node 30 having a function of controlling an application server. NRF is a network node 30 having a function of discovering NF instances which provide services. SEPP is a non-transparent proxy and filters control plane messages between PLMNs (Public Land Mobile Networks). vSEPP shown in Fig. 2 is a SEPP in a visited network, and hSEPP is a SEPP in a home network.

As shown in Fig. 2, the UE is in a roaming environment connected to RAN and AMF in VPLMN (Visited PLMN). VPLMN and HPLMN (Home PLMN) are connected to each other via vSEPP and hSEPP. The UE can communicate with the UDM of HPLMN via the AMF of VPLMN, for example.

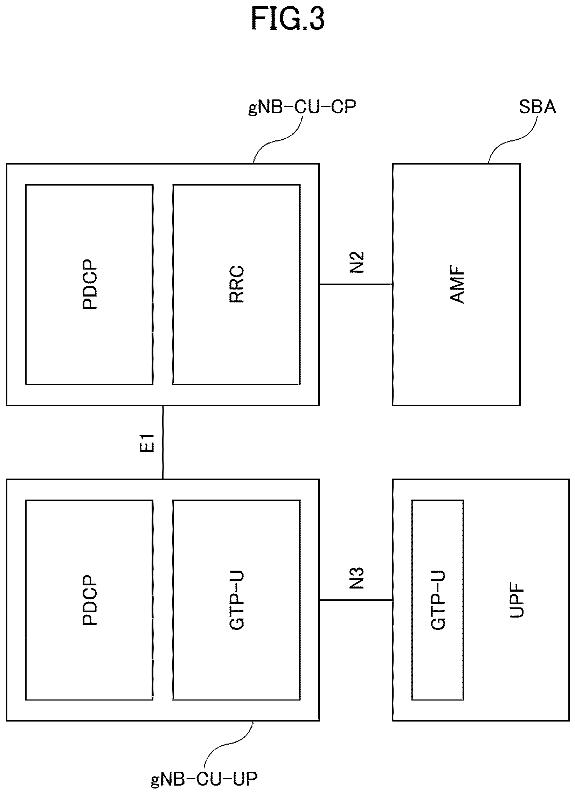

Fig. 3 is a drawing for describing an example (1) of a network architecture. As illustrated in Fig. 3, the gNB-CU-CP (gNB Central Unit Control Plane) has functions of PDCP (Packet Data Convergence Protocol) and RRC (Radio Resource Control), and is connected to the AMF in the SBA (Service Based Architecture) via the N2 interface (refer to the reference document 1 and the reference document 2). In addition, the gNB-CU-CP is connected to the gNB-CU-UP (gNB Central Unit User Plane) via an E1 interface.

The gNB-CU-UP has functions of PDCP and GTP-U (GPRS Tunnelling Protocol), and is connected to the UPF that has a function of GTP-U via the N3 interface (refer to the reference document 1 and the reference document 2).

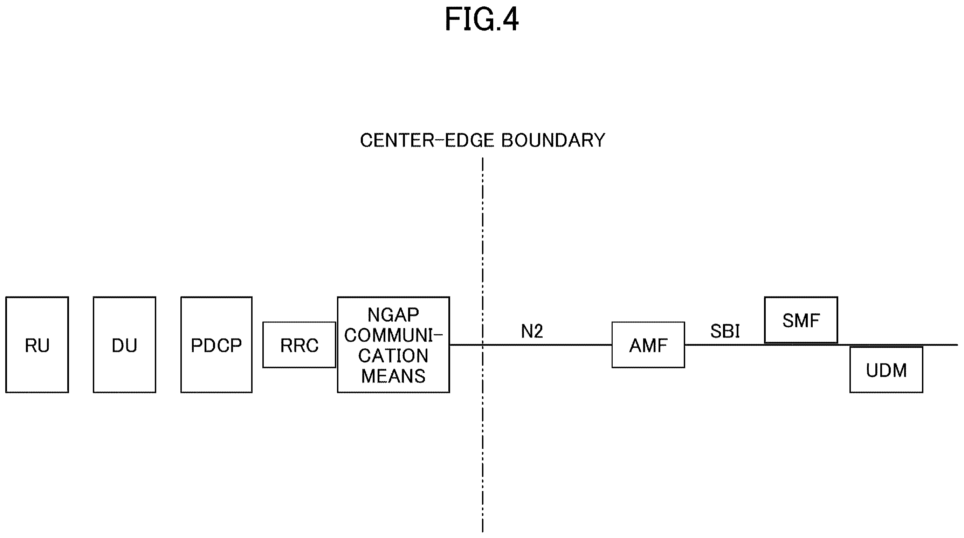

Fig. 4 is a drawing for describing an example (2) of a network architecture. With respect to the C plane (Control plane), as illustrated in Fig. 4, the RAN side consists of RU (Radio Unit), DU (Distributed Unit), PDCP, RRC, and NGAP communication means (vehicle), in this order. The center-edge boundary link consists of the N2 interface and the NGAP communication means is connected to the AMF. For example, the AMF, the SMF, the UDM, and the like, are connected to each other via the SBI (Service Based Interface).

Here, in the future network architecture, with respect to the C plane, in order to integrate the mechanism of management and operation of the center-edge boundary link with the mechanism of management and operation of the inter-NF path in the core network, application of an SBI to the boundary link and application of a service mesh are being discussed.

For example, the gNB-CU-CP is divided into the PDCP termination part, the gNB-PDCP, and the RRC termination part, the RRC-NF. The gNB-PDCP and the RRC-NF are connected to each other via SBI. The gNB-PDCP has an F1 interface and is connected to the DU via the F1 interface. Except for the F1 interface, both the gNB-PDCP and the RRC-NF are integrated into the SBA.

Similarly, the gNB-CU-UP is divided into the PDCP termination part, which is the gNB-PDCP, and the GTP-U termination part, which is the GTP-U end station adapter. The GTP-U end station adapter is integrated with the transport network and the GTP-U end station adapter on the UPF side to form a generic TN (Transport Network) system. It is to be noted that the generic TN may use a U-plane protocol other than the GTP-U. For example, the generic TN system may include an end station adapter that terminates the U-plane protocol of the N3 interface.

The E1 interface between the gNB-CU-CP and the gNB-CU-UP is replaced by an enhancement of the SBI between the gNB-PDCP and the RRC-NF. The SBI is applied to each message of the E1 interface. It is to be noted that the PDCP termination part gNB-PDCP in the gNB-CU-CP and the PDCP terminating part gNB-PDCP in the gNB-CU-UP may be integrated into one function to be operated.

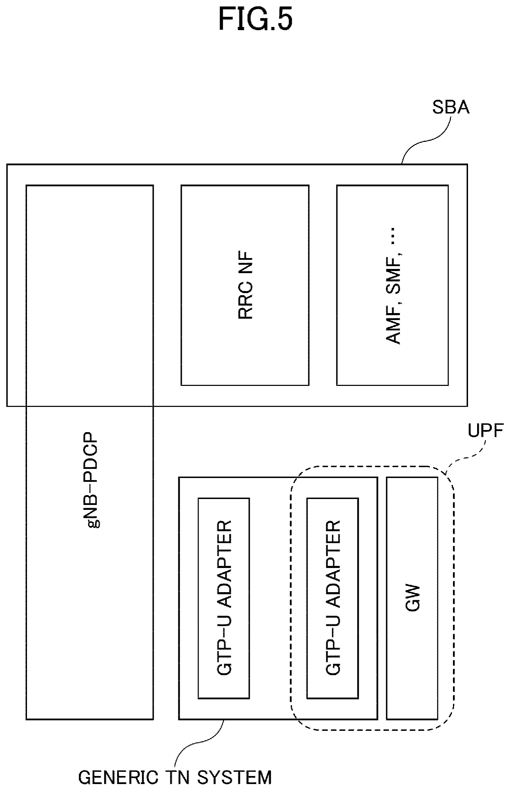

Fig. 5 is a drawing for describing an example (1) of a network architecture in an embodiment of the present invention. As illustrated in Fig. 5, the gNB-PDCP, the RRC-NF, the AMF, the SMF, and the like are included in the SBA. The gNB-PDCP is connected to the GTP-U end station adapter of the generic TN system separated from the gNB-CU-UP.

It is to be noted that the UPF may include the GTP-U end station adapter on the UPF side and the GW (Gateway).

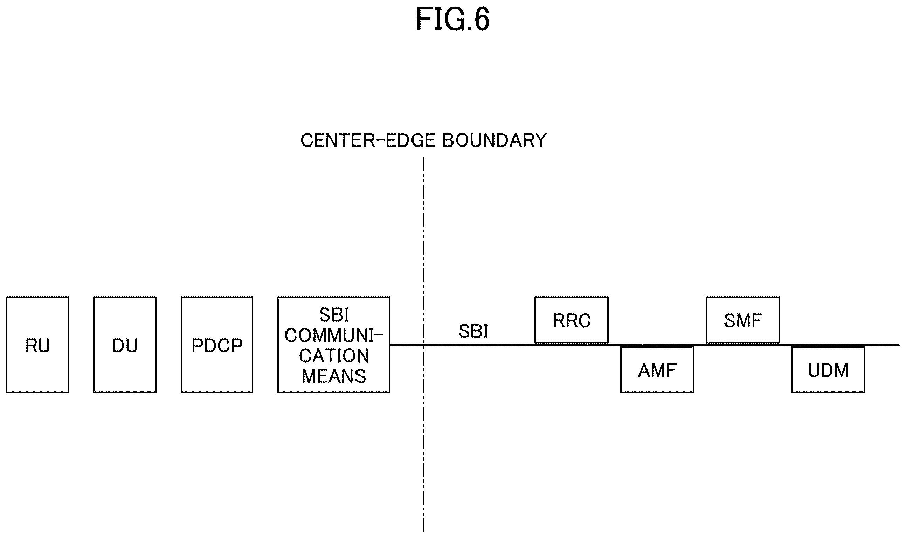

Fig. 6 is a drawing for describing an example (2) of a network architecture in an embodiment of the present invention. As illustrated in Fig. 6, the RAN side consists of the RU, the DU, the PDCP, and the SBI communication means (vehicle) in this order. The center-edge boundary link consists of the SBI interface, and the RRC, the AMF, the SMF, the UDM, and the like are connected to each other via the SBI.

Here, with respect to the future network architecture, discussions are being held on: an innovation of the U-plane (User Plane) transport network; a mechanism that allows future independent development of functions related to the transport network; a mechanism for the mobile communication carriers to select functions related to the transport network from options; and the like.

With respect to the U-plane transport network, discussions are being held on: utilization of SRv6 (Segment Routing Ipv6); utilization of the optical transportation network using the photoelectric conversion; and the like, instead of using the GTP-U (GPRS Tunnelling Protocol for User Plane) as in the conventional way. However, with the current configuration, independent development or selection of functions related to the transport network cannot be achieved.

Accordingly, independent development or selection of the U-plane transport network may be enabled by introducing the generic TN system and the generic U-plane path setup procedure.

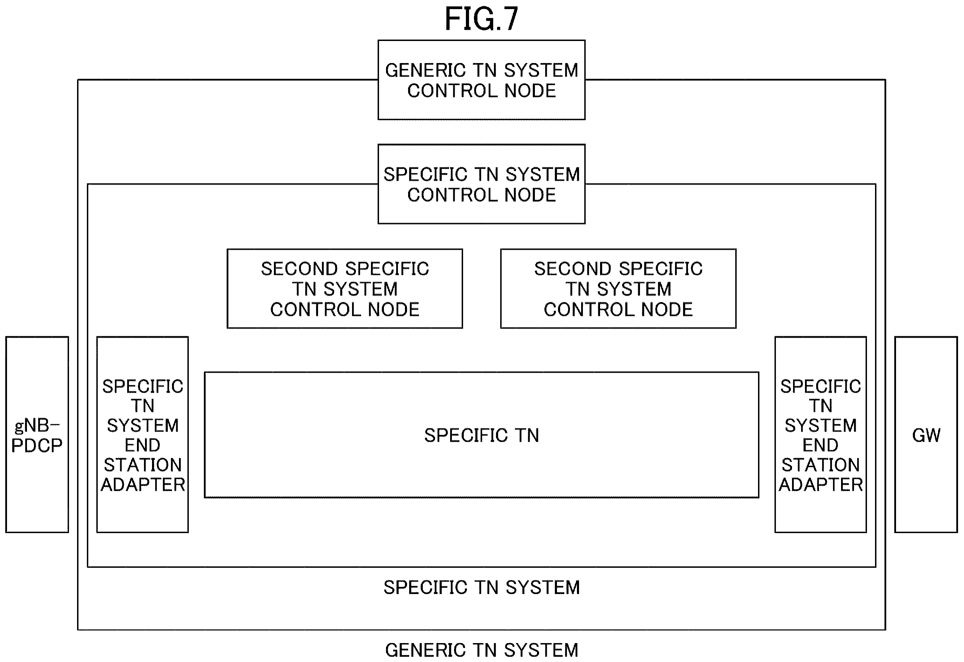

Fig. 7 is a drawing for describing an example (1) of a generic TN system in an embodiment of the present invention. As illustrated in Fig. 7, the generic TN system consists of a generic TN system control node and a specific TN system. As illustrated in Fig. 7, in a case of applying for the N3 interface, one end point may be adjacent to the gNB-PDCP and the other end point may be adjacent to the GW.

In addition, the generic TN system not only may be applied for the N3 interface in order to handle the PDU session and the QoS flow, but also may be applied for the Xn-U or for the F1-U.

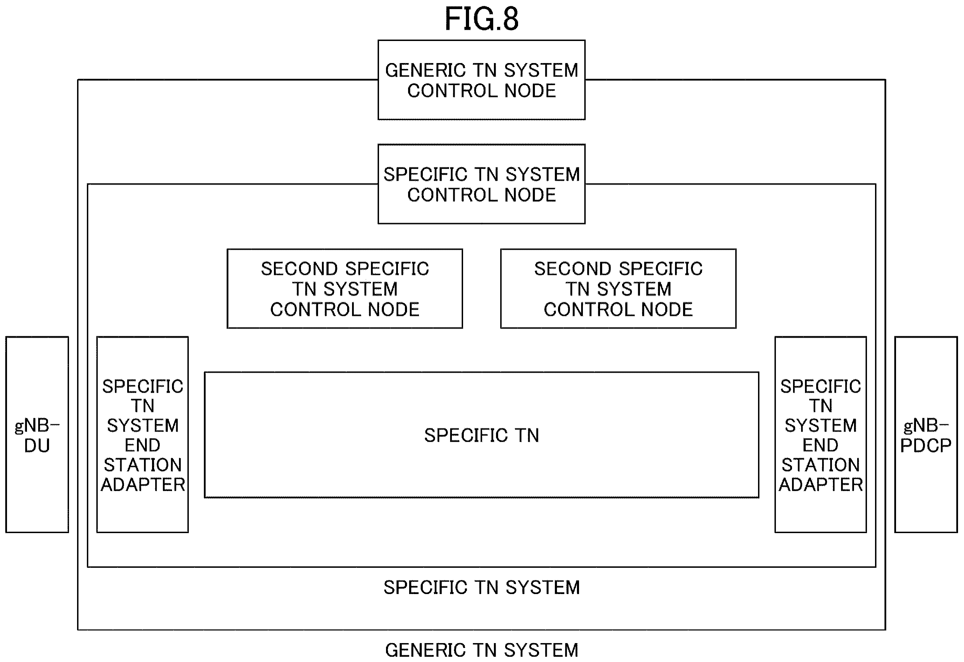

Fig. 8 is a drawing for describing an example (1) of a generic TN system in an embodiment of the present invention. As illustrated in Fig. 8, the data transfer at the time of handover, the PDCP entity-centered PDCP-PDU handling at the time of DC, and the redundant transmission at the time of reliability improvement may be achieved by applying the generic TN system for the Xn-U. As illustrated in Fig. 8, in a case of applying for the Xu-U interface, one end point may be adjacent to the gNB-PDCP and the other end point may be adjacent to the gNB-PDCP.

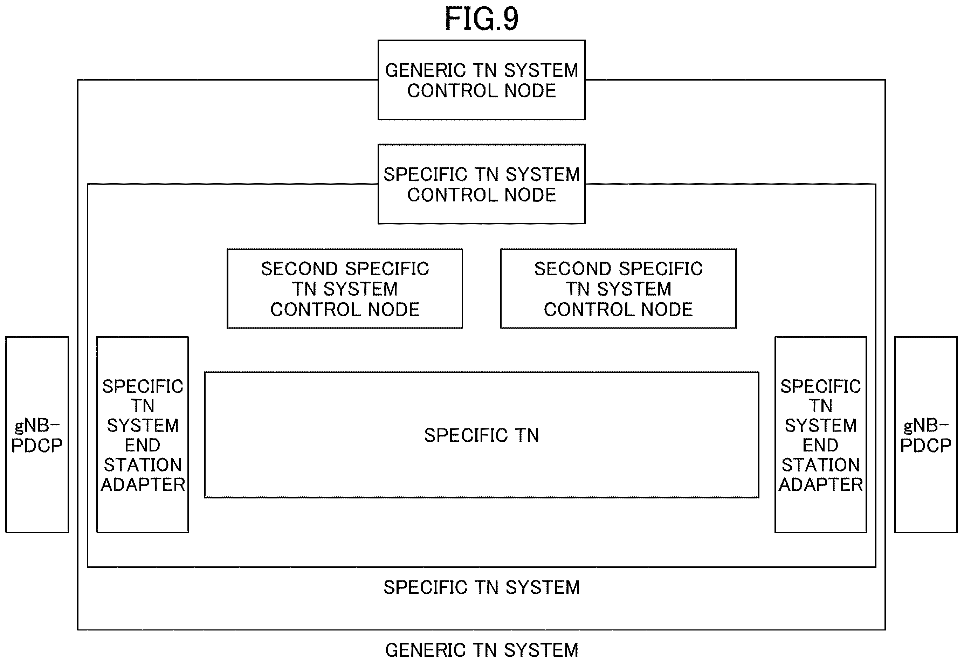

Fig. 9 is a drawing for describing an example (2) of a generic TN system in an embodiment of the present invention. As illustrated in Fig. 9, the handling of the normal DRB (Data Radio Bearer) and the PDCP entity-centered PDCP-PDU handling at the time of DC may be achieved by applying the generic TN system for the F1-U. As illustrated in Fig. 9, in a case of applying for the F1-U interface, one end point may be adjacent to the gNB-DU and the other end point may be adjacent to the gNB-PDCP.

The generic TN system control node has an NBI (Northbound Interface) with respect to the 5GS (5G System) - C-plane. With respect to a specific PDU session or a DRB, the generic TN system ingress connection point, the egress connection point, and information related to the traffic scheduling (for example, the PCC (Policy and Charging Control) rule, traffic characteristics information, and the like) are obtained from the 5GS by the NBI. In addition, the generic TN system control node controls a specific TN system control node in the generic TN system.

With respect to the specific TN system, there are a GTP-U network, TSN (Time Sensitive Networking), an optical transmission network, and the like. The specific TN system follows indications from the generic TN system control node.

As illustrated in Fig. 7, the specific TN system includes a specific TN system control node, second specific control nodes, specific TN system end station adapters, and a specific TN.

The specific TN system control node has an NBI with respect to the generic TN system control node. Information obtained from the 5GS by the generic TN system control node is passed to the NBI of the fixed system control node.

The second specific TN system control nodes do not have an NBI with respect to the generic TN system control node. The second specific TN system control nodes control the specific TN system by cooperating with the specific TN system control node.

The specific TN system end station adapters are placed at the ingress and the egress of the specific TN system. The specific TN system end station adapters add required information to the data to be transferred and perform required conversion in order to generate a form that can be transferred in the specific TN.

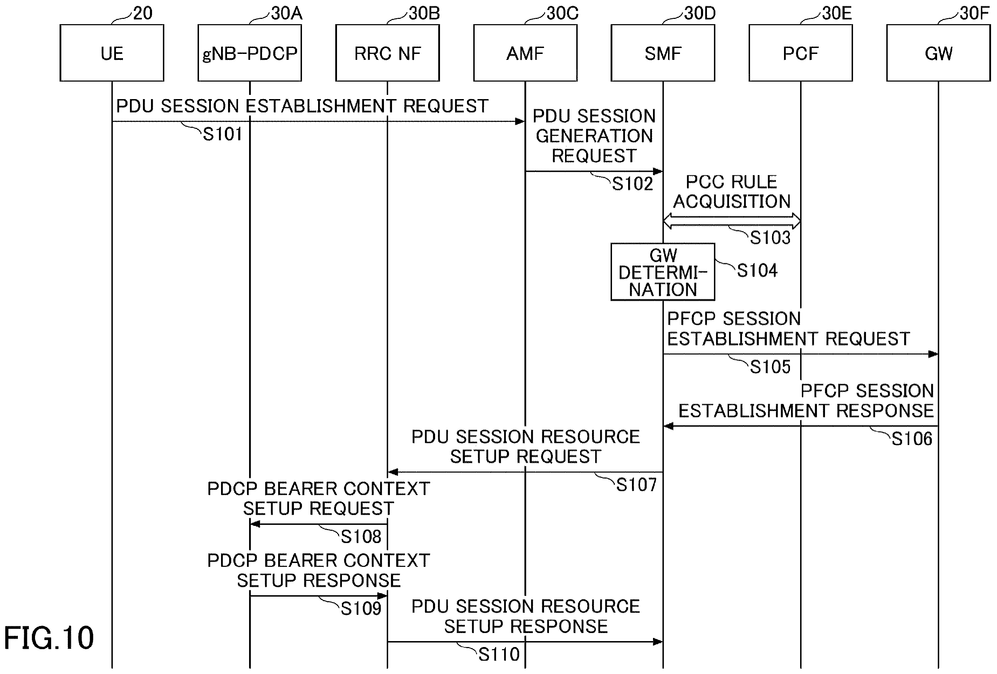

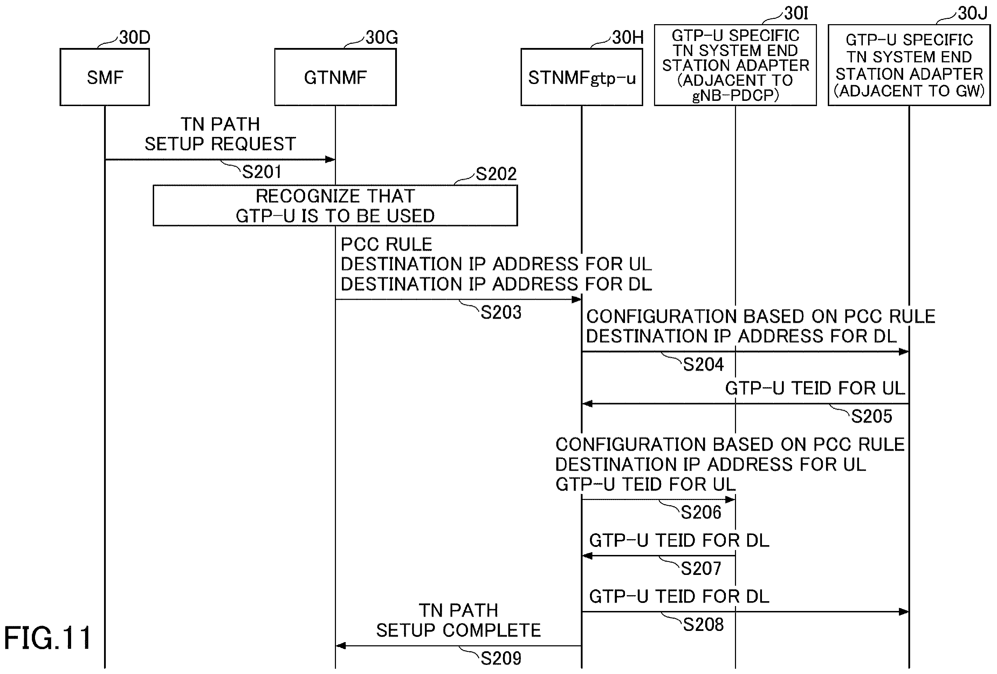

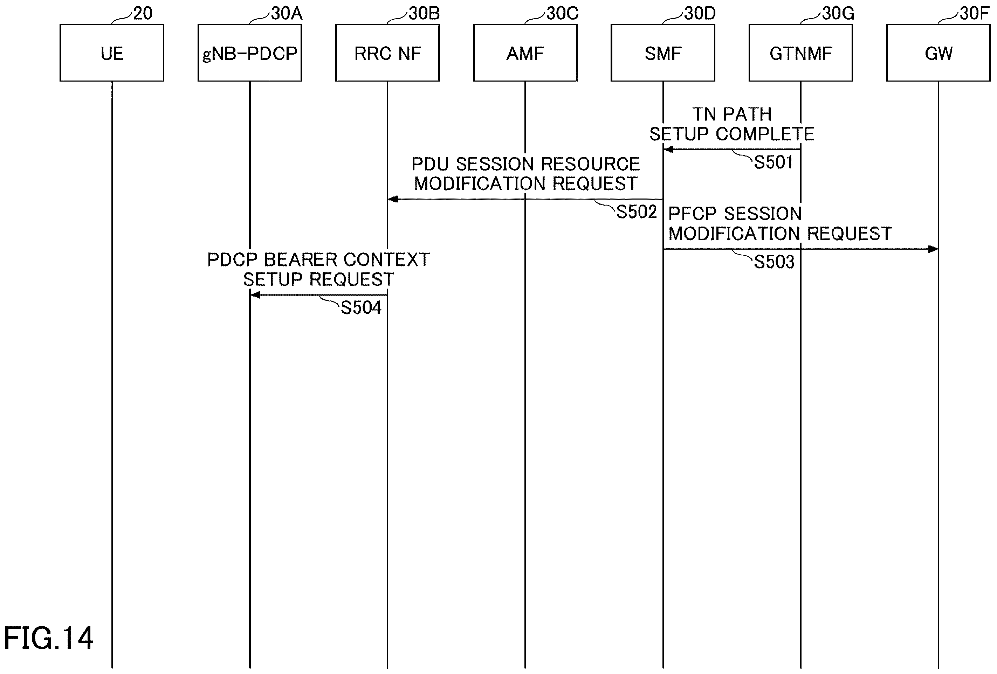

The following generic U-plane path setup procedure using a generic TN system will be deployed. The following sequence diagram in Fig. 10 is connected to the sequence diagram illustrated in Fig. 11, Fig. 12, or Fig. 13. The following sequence diagram illustrated in Fig. 11, Fig. 12, or Fig. 13 is connected to the sequence diagram illustrated in Fig. 14.

Fig. 10 is a sequence diagram for describing an example of starting the PDU session establishment in an embodiment of the present invention. In step S101, the UE 20 transmits a PDU session establishment request to the AMF 30C (refer to Non-Patent Literature 3). In subsequent step S102, the AMF 30C transmits a PDU session generation request to the SMF 30D. In subsequent step S103, the SMF 30D obtains a PCC rule (that may be a default PCC rule) from the PCF 30E (refer to Non-Patent Literature 3). The PCC rule may include a TSCAC (Time Sensitive Communication Assistance Container).

In subsequent step S104, the SMF 30D determines a GW in the same manner as in a case of determining a UPF in the conventional technical specification (refer to Non-Patent Literature 3). In subsequent step S105, a PFCP session establishment request is transmitted to the GW 30F in the same manner as in a case of configuring the UPF in the conventional technical specification (refer to Non-Patent Literature 3). The PFCP session establishment request may be Ngw_PFCPSessionEstablishment request that is obtained by applying the SBI to the PFCP Session Establishment Request in clause 7.5.2.1 of Non-Patent Literature 4.

In subsequent step S106, the GW 30F transmits a PFCP session establishment response to the SMF 30D (refer to Non-Patent Literature 3). The PFCP session establishment response may be Ngw_PFCPSessionEstablishment response that is obtained by applying the SBI to the PFCP Session Establishment Response in clause 7.5.3.1 of Non-Patent Literature 4. Although the PFCP session establishment response includes a Created PDR (Packet Detection Rule) IE and the Created PDR IE includes a Local F-TEID (Fully Qualified Tunnel Endpoint Identifier), the GW 30F configures an IP address in the Local F-TEID, and is not required to configure TEID.

In subsequent step S107, the SMF 30D transmits a PDU session resource setup request to the RRC-NF 30B. The PDU session resource setup request may include a PDU Session Resource Setup Request Transfer IE in clause 9.3.4.1 of Non-Patent Document 5. The PDU session resource setup request may include TSCAI (TSC Assistance Information). The PDU session resource setup request Transfer IE may include a UL NG-U UP TNL information IE. The SMF 30D configures an IP address in the UL NG-U UP TNL Information IE, and is not required to configure GTP-TEID.

In subsequent step S108, the RRC NF 30B transmits a PDCP bearer context setup request to the gNB-PDCP 30A. The PDCP bearer context setup request may be Ngnb-pdcp_BearerContextSetup request that is obtained by applying the SBI to clause 9.2.2.1 of Non-Patent Document 6. The PDCP bearer context setup request may include TSCAI. The PDCP bearer context setup request may include a PDU Session Resource To Setup List IE (refer to clause 9.3.3.2 of Non-Patent Document 6). The PDU Session Resource To Setup List IE may include an NG UL UP Transport Layer Information IE. The RRC-NF 30B may configure an IP address to the NG UL UP Transport Layer Information IE without configuring a GTP-TEID.

In subsequent step S109, the gNB-PDCP 30A transmits a PDCP bearer context setup response to the RRC-NF 30B. The PDCP bearer context setup response may be Ngnb-pdcp_BearerContextSetup response that is obtained by applying the SBI to clause 9.2.2.2 of Non-Patent Document 6. The PDCP bearer context setup response may include the established traffic characteristics information. The PDCP bearer context setup response may include a PDU Session Resource Setup List IE (refer to clause 9.3.3.5 of Non-Patent Document 6). The PDU Session Resource Setup List IE may include an NG DL UP Transport Layer Information IE. The gNB-PDCP 30A may configure an IP address to the NG DL UP Transport Layer Information IE without configuring a GTP-TEID.

In subsequent step S110, the RRC-NF 30B transmits a PDU session resource setup response to the SMF 30D. The PDU session resource setup response may include a PDU Session Resource Setup Response Transfer IE in clause 9.3.4.2 of Non-Patent Document 5. The PDU session resource setup response may include the established traffic characteristics information. The PDU Session Resource Setup Response Transfer IE may include a DL QoS Flow per TNL Information IE (9.3.4.2 of Non-Patent Document 5). The RRC-NF 30B configures an IP address in a UP Transport Layer Information IE of the DL QoS Flow per TNL Information IE, and is not required to configure a GTP-TEID.

Fig. 11 is a sequence diagram for describing an example of TN path setup in a case of a GTP-U specific TN system in an embodiment of the present invention. In step S201 subsequent to step S110, the SMF 30D transmits a TN path setup request that is a new message to a generic TN system control node (hereinafter, also referred to as "GTNMF"). The message is obtained by applying the SBI and may be referred to as Ngtnmf_TNpathSetup request. The message may include a PCC rule (may be a default PCC rule), traffic characteristics information provided by the gNB-PDCP 30A, the destination IP address for UL (Uplink) provided by the GW 30F, and the destination IP address for DL (Downlink) provided by the gNB-PDCP 30A.

In subsequent step S202, the GTNMF 30G recognizes that the GTP-U is to be used according to the network configuration. In subsequent step S203, the GTNMF 30G transmits a PCC rule, the destination IP address for UL, and the destination IP address for DL to the GTP-U specific TN system control node (hereinafter, also referred to as "STNMFgtp-u").

In subsequent step S204, the STNMFgtp-u 30H transmits a configuration based on the PCC rule and the destination IP address for DL to a GTP-U specific TN system end station adapter 30J that is adjacent to the GW. In subsequent step S205, the GTP-U specific TN system end station adapter 30J that is adjacent to the GW selects a GTP-U TEID for UL and transmits the GTP-U TEID to the STNMFgtp-u 30H.

In subsequent step S206, the STNMFgtp-u 30H transmits a configuration based on the PCC rule, the destination IP address for UL, and the GTP-U TEID for UL to a GTP-U specific TN system end station adapter 30I that is adjacent to the gNB-PDCP. In subsequent step S207, the GTP-U specific TN system end station adapter 30I that is adjacent to the gNB-PDCP selects a GTP-U TEID for DL and transmits the GTP-U TEID to the STNMFgtp-u 30H.

In subsequent step S208, the STNMFgtp-u 30H transmits the GTP-UE TEID for DL to the GTP-U specific TN system end station adapter 30J that is adjacent to the GW. In subsequent step S209, the STNMFgtp-u 30H transmits a TN path setup complete to the GTNMF 30G.

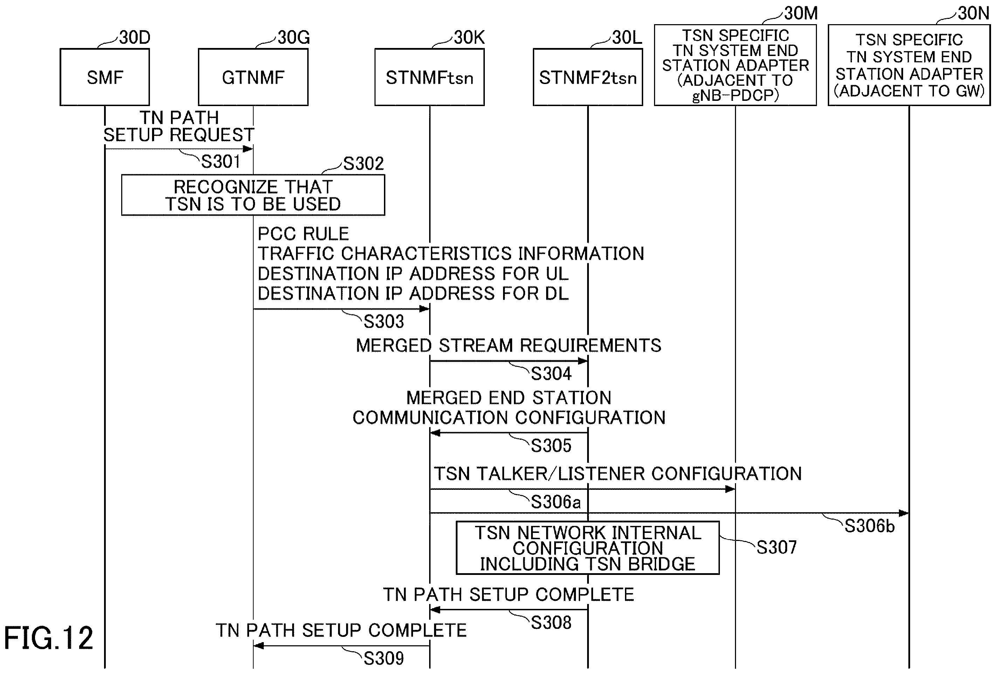

Fig. 12 is a sequence diagram for describing an example of TN path setup in a case of a TSN specific TN system in an embodiment of the present invention. In step S301 subsequent to step S110, the SMF 30D transmits a TN path setup request that is a new message to a generic TN system control node (hereinafter, also referred to as "GTNMF"). The message is obtained by applying the SBI and may be referred to as Ngtnmf_TNpathSetup request. The message may include a PCC rule (may be a default PCC rule), traffic characteristics information provided by the gNB-PDCP 30A, the destination IP address for UL provided by the GW 30F, and the destination IP address for DL provided by the gNB-PDCP 30A.

In subsequent step S302, the GTNMF 30G recognizes that the TSN is to be used according to the network configuration. In subsequent step S303, the GTNMF 30G transmits a PCC rule, the traffic characteristics information, the destination IP address for UL, and the destination IP address for DL to the TSN specific TN system control node (hereinafter, referred to as "STNMFtsn") that operates as a CUC (Centralized User Configuration).

In subsequent step S304, the STNMFtsn 30K generates merged stream requirements based on the information received in step S303, and transmits the merged stream requirements to a second TSN specific TN system control node that operates as a CNC (Central Network Controller) (hereinafter, also referred to as "STNMF2tsn") (refer to Non-Patent Literature 7). In subsequent step S305, the STNMF2tsn 30L transmits a merged end station communication configuration to the STNMFtsn 30K.

In subsequent steps S306a and S306b, the STNMFtsn 30K configures a TSN specific TN system end station adapter 30M that is adjacent to the gNB-PDCP and a TSN specific TN system end station adapter 30N that is adjacent to the GW, the adapters operating as TSN talker/listener, based on the merged end station communication configuration. In subsequent step S307, the STNMF2tsn 30L performs the TSN network internal configuration including the TSN bridge. In subsequent step S308, the STNMF2ts 30L transmits a TN path setup complete to the STNMFtsn 30K. In subsequent step S309, the STNMFtsn 30K transmits a TN path setup complete to the GTNMF 30G.

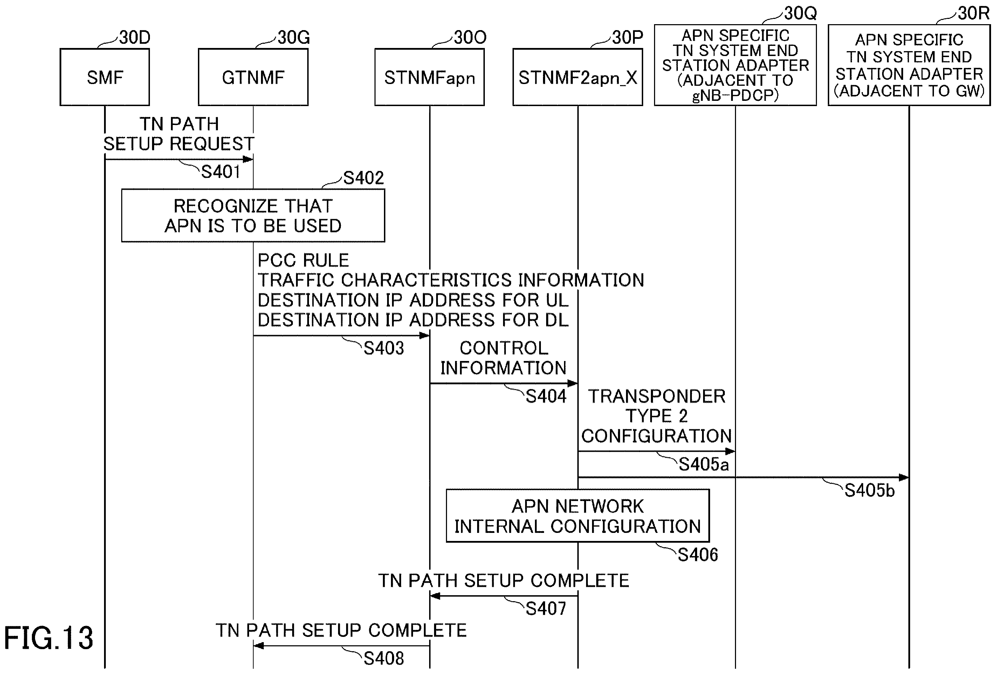

Fig. 13 is a sequence diagram for describing an example (1) of TN path setup in a case of an APN specific TN system in an embodiment of the present invention. In step S401 subsequent to step S110, the SMF 30D transmits a TN path setup request that is a new message to a generic TN system control node (hereinafter, also referred to as "GTNMF"). The message is obtained by applying the SBI and may be referred to as Ngtnmf_TNpathSetup request. The message may include a PCC rule (may be a default PCC rule), traffic characteristics information provided by the gNB-PDCP 30A, the destination IP address for UL provided by the GW 30F, and the destination IP address for DL provided by the gNB-PDCP 30A.

In subsequent step S402, the GTNMF 30G recognizes that the APN (All-Photonic Network) is to be used according to the network configuration. In subsequent step S403, the GTNMF 30G transmits a PCC rule, the traffic characteristics information, the destination IP address for UL, and the destination IP address for DL to an APN specific TN system control node (hereinafter, also referred to as "STNMFapn") that operates as Apps in the Open APN Conroller (refer to Figure 3.3.1-2 in Non-Patent Literature 8).

In subsequent step S404, the STNMFapn 30O generates appropriate control information based on the information received in step S403, and transmits the control information to various control functions in the Open APN Controller that function as the second APN specific TN system control node group (hereinafter, also referred to as "STNMF2apn_X"), for example, a static and dynamic path control function, a band control function, a path control function, a monitoring function, and the like.

In subsequent steps S405a and S405b, the STNMF2apn_X 30P configures an APN specific TN system end station adapter 30Q that is adjacent to the gNB-PDCP and an APN specific TN system end station adapter 30R that is adjacent to the GW, the adapters 30Q and 30R operating as transponders type 2 (refer to Figure 3.3.1-2 in Non-Patent Literature 8).

In subsequent step S406, the STNMF2apn_X 30P performs the APN network internal configuration including the optical aggregation apparatus and the optical switching and amplification apparatus (refer to Figure 3.3.1-2 in Non-Patent Literature 8). In subsequent step S407, the STNMF2apn_X 30P transmits a TN path setup complete to the STNMFapn 30O. In subsequent step S408, the STNMFapn 30O transmits a TN path setup complete to the GTNMF 30G.

Fig. 14 is a sequence diagram for describing an example (1) of PDU session establishment complete in an embodiment of the present invention. In step S501 subsequent to step S209, step S309, or step S408, the GTNMF 30G transmits a TN path setup complete to the SMF 30D. The TN path setup complete may be a new message, Nsmf_TNpathSetupNotify request. The message may include a TN path setup complete indication IE that is a new IE indicating that the path setup in the generic TN system has been completed.

In subsequent step S502, the SMF 30D transmits a PDU session resource modification request to the RRC-NF 30B. The PDU session resource modification request may include a PDU Session Resource Modify Request Transfer IE in clause 9.3.4.3 of Non-Patent Literature 5. The PDU Session Resource Modify Request Transfer IE may include a TN path setup complete indication IE.

In subsequent step S503, the SMF 30D transmits a PFCP session modification request to the GW 30F. The PFCP session modification request may be PFCP Session Modification Request and may include a TN path setup complete indication IE.

In subsequent step S504, the RRC-NF 30B transmits a PDCP bearer context modification request to the gNB-PDCP 30A. The PDCP bearer context modification request may be Ngnb-pdcp_BearerContextModification request that is obtained by applying the SBI to clause 9.2.2.4 of Non-Patent Literature 6 including the TN path setup complete indication IE.

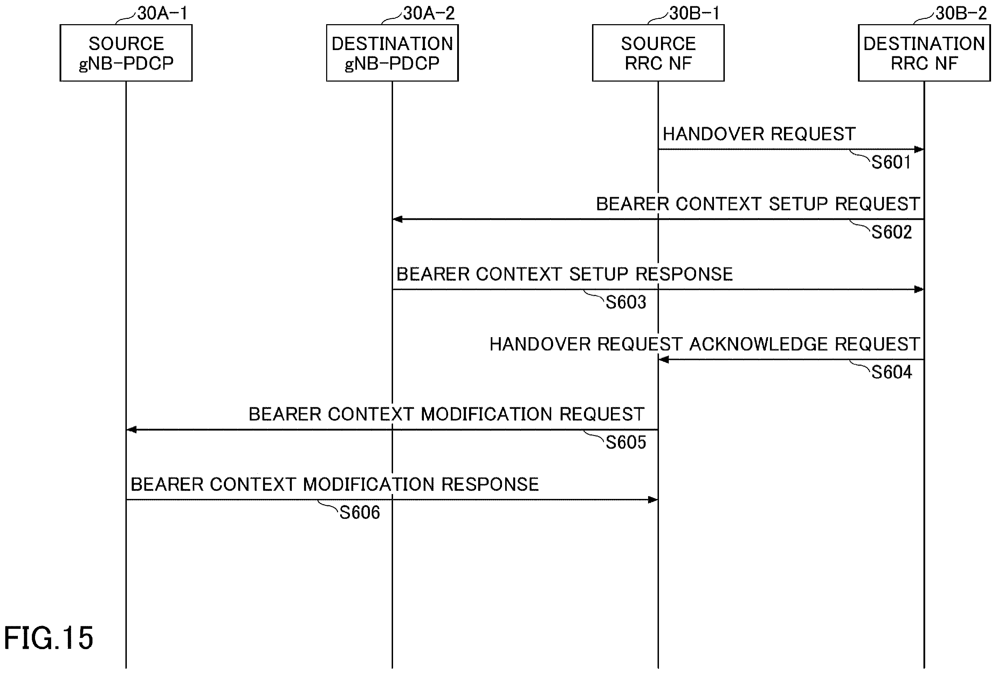

Fig. 15 is a sequence diagram for describing an example (1) of a handover in an embodiment of the present invention. In step S601, a source RRC-NF 30B-1 transmits a handover request to a destination RRC-NF 30B-2. The handover request may be Nrrc_HandoverRequest request that is obtained by applying the SBI to clause 9.1.1.1 of Non-Patent Literature 10.

In subsequent step S602, the destination RRC-NF 30B-2 transmits a bearer context setup request to a destination gNB-PDCP 30A-2. The bearer context setup request may be Ngnb-pdcp_BearerContextSetup request that is obtained by applying the SBI to clause 9.2.2.1 of Non-Patent Literature 6 (refer to Non-Patent Literature 2).

In subsequent step S603, the destination gNB-PDCP 30A-2 transmits a bearer context setup response to the destination RRC-NF 30B-2. The bearer context setup response may be Ngnb-pdcp_BearerContextSetup response that is obtained by applying the SBI to clause 9.2.2.2 of Non-Patent Literature 6. The bearer context setup response includes a PDU Session Resource Setup List IE and the IE includes a DL Data Forwarding IE. The destination gNB-PDCP 30A-2 may configure an IP address in the DL Data Forwarding IE, and is not required to configure a GTP-TEID.

In subsequent step S604, the destination RRC-NF 30B-2 transmits a handover request acknowledge request to the source RRC-NF 30B-1. The handover request acknowledge request may be Nrrc_HandoverRequestAcknowledge request that is obtained by applying the SBI to clause 9.1.1.2 of Non-Patent Literature 10 (refer to Non-Patent Literature 2).

In subsequent step S605, the source RRC-NF 30B-1 transmits a bearer context modification request to the destination gNB-PDCP 30A-1. The bearer context modification request may be Ngnb-pdcp_BearerContextModification request that is obtained by applying the SBI to clause 9.2.25 of Non-Patent Literature 6. The bearer context modification request includes a PDU Session Resource To Modify List IE, and the IE includes a PDU Session Data Forwarding Information IE. The destination RRC-NF 30B-1 configures an IP address in the PDU Session Data Forwarding Information IE, and is not required to configure GTP-TEID.

In subsequent step S606, the source gNB-PDCP 30A-1 transmits a bearer context modification response to the source RRC-NF 30B-1. The bearer context modification response may be Ngnb-pdcp_BearerContextModification response that is obtained by applying the SBI to Non-Patent Literature 9.2.2.5. The bearer context modification request includes a PDU Session Resource Modified List IE, and the IE includes a PDU Session Data Forwarding Information Response IE. The source gNB-PDCP 30A-1 configures an IP address in the PDU Session Data Forwarding Information Response IE, and is not required to configure GTP-TEID.

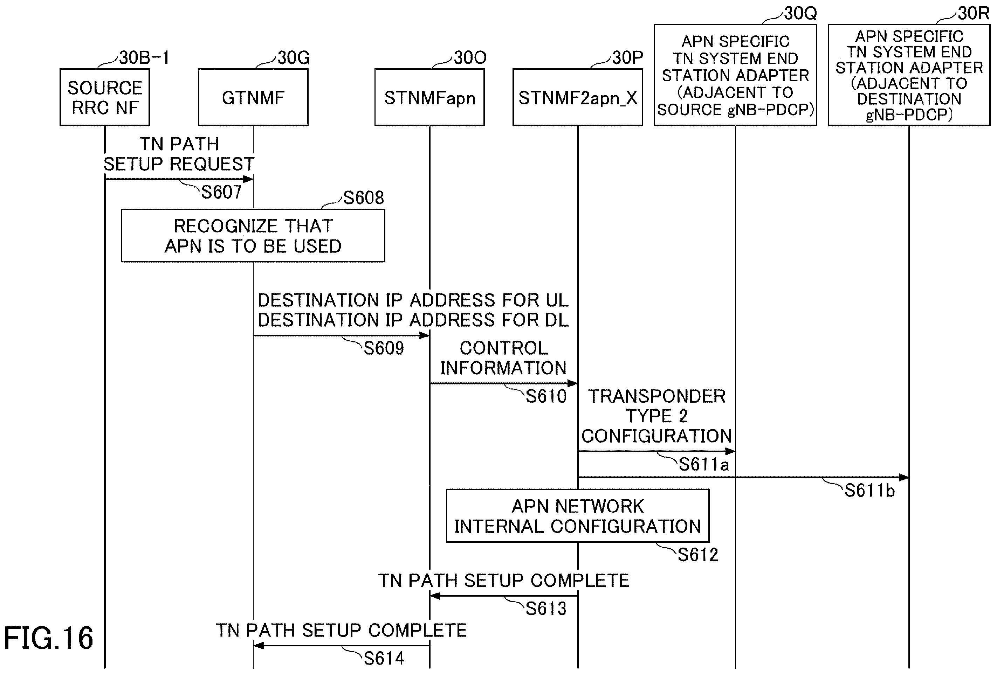

Fig. 16 is a sequence diagram for describing an example (2) of a handover in an embodiment of the present invention. In step S607 subsequent to step S606, the source RRC-NF 30B-1 transmits a TN path setup request that is a new message to a generic TN system control node (hereinafter, also referred to as "GTNMF"). The message is obtained by applying the SBI and may be referred to as Ngtnmf_TNpathSetup request. The message may include the destination IP address for UL provided by the source gNB-PDCP 30A-1 and the destination IP address for DL provided by the destination gNB-PDCP 30A-2.

In subsequent step S608, the GTNMF 30G recognizes that the APN (All-Photonic Network) is to be used according to the network configuration. In subsequent step S609, the GTNMF 30G transmits the destination IP address for UL and the destination IP address for DL to an APN specific TN system control node (hereinafter, also referred to as "STNMFapn") that operates as Apps in the Open APN Conroller (refer to Figure 3.3.1-2 in Non-Patent Literature 8).

In subsequent step S610, the STNMFapn 30O generates appropriate control information based on the information received in step S403, and transmits the control information to various control functions in the Open APN Controller that function as the second APN specific TN system control node group (hereinafter, also referred to as "STNMF2apn_X"), for example, a static and dynamic path control function, a band control function, a path control function, a monitoring function, and the like.

In subsequent steps S611a and S611b, the STNMF2apn_X 30P configures an APN specific TN system end station adapter 30Q that is adjacent to the source gNB-PDCP 30A-1 and an APN specific TN system end station adapter 30R that is adjacent to the destination gNB-PDCP 30A-2, the adapters 30Q and 30R operating as transponders type 2 (refer to Figure 3.3.1-2 in Non-Patent Literature 8).

In subsequent step S612, the STNMF2apn_X 30P performs the APN network internal configuration including the optical aggregation apparatus and the optical switching and amplification apparatus (refer to Figure 3.3.1-2 in Non-Patent Literature 8). In subsequent step S613, the STNMF2apn_X 30P transmits a TN path setup complete to the STNMFapn 30O. In subsequent step S614, the STNMFapn 30O transmits a TN path setup complete to the GTNMF 30G.

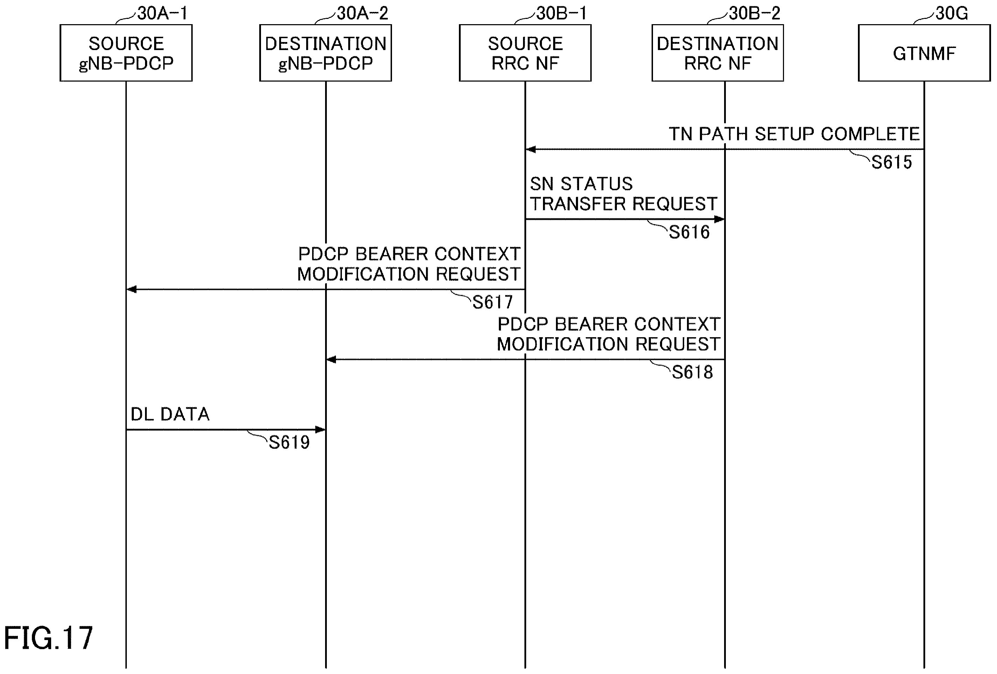

Fig. 17 is a sequence diagram for describing an example (3) of a handover in an embodiment of the present invention. In step S615 subsequent to step S614, the GTNMF 30G transmits a TN path setup complete indication to the source RRC-NF 30B-1. The TN path setup complete indication may include a new message Ngtnmf_TNpathSetupNotify request that is obtained by applying the SBI or may include a new IE of TN path setup complete indication IE.

In subsequent step S616, the source RRC-NF 30B-1 transmits an SN status transfer request to the destination RRC-NF 30B-2. The SN status transfer request may be Nrrc_SNStatusTransfer request that is obtained by applying the SBI to clause 9.1.1.4 of Non-Patent Literature 10. The SN status transfer request may include a TN path setup complete indication IE.

In subsequent step S617, the source RRC-NF 30B-1 transmits a PDCP bearer context modification request to the source gNB-PDCP 30A-1. The PDCP bearer context modification request may be Ngnb-pdcp_BearerContextModification request that is obtained by applying the SBI to clause 9.2.2.4 of Non-Patent Literature 6. The PDCP bearer context modification request may include a TN path setup complete indication IE.

In subsequent step S618, the destination RRC-NF 30B-2 transmits a PDCP bearer context modification request to the destination gNB-PDCP 30A-2. The PDCP bearer context modification request may be Ngnb-pdcp_BearerContextModification request that is obtained by applying the SBI to clause 9.2.2.4 of Non-Patent Literature 6. The PDCP bearer context modification request may include a TN path setup complete indication IE.

In subsequent step S619, the source gNBG-PDCP 30A-1 transmits DL data to the destination gNB-PDCP 30A-2 (refer to Non-Patent Literature 2).

Here, the above-described generic TN system is required to support identifiers, that are dynamically configured for each of the individual T-PDUs, used for multiplexing and for process identification and separation (for example, PDCP-SN used for handover or dual connectivity, and QoS-related identifiers that will be described in the XRM technical specification) from among the functions provided by GTP-U. In addition, from among the functions provided by GTP-U, an end marker is required to be supported and functions that are equal to or better than those of the GTP-U network on the IP network are required to be supported.

In addition, there are problems described in the following 1) to 3) in the conventional technical specification that uses GTP-U.

1) Because each function has been deployed over generations, there are information elements that are no longer needed today (for example, a service class identifier), the same information can be set in a plurality of information elements (for example, PDCP PDU SN), there is no consistency in the arrangement of information elements, and as a result, the usage is complicated.
2) Communication resources are forced to decrease because TEID and QFI (QoS Flow Identifier) required for static process separation are always included.
3) QoS-related identifiers that will be included in the technical specification of Release 18 SA2 XRM are used for reducing the amount of information by having the RTP header interpreted by the UPF. It is more straightforward for the RAN to perform interpretation as an optional function.

In order to handle the above-described problems, functions of: the GTP-U PDCP-PDU number used by Xn-U; the NR UP protocol used by Xn-U and F1-U; and the GTP-U end marker used by N3 and Xn-U, will be implemented. In addition, the contents of technical specifications of Release 18 SA2 XRM used by N3 will not be included. In addition, information such as TEID and QFI required for static process separation will not be configured.

Accordingly, in order for the generic TN system that does not use GTP-U to efficiently implement the functions that are equivalent to functions of the conventional technical specification that use GTP-U, the NR user plane protocol (refer to Non-Patent Literature 11) may be enhanced with the intention of being used together with the generic TN system. Hereinafter, the NR user plane protocol will be also referred to as NR UP protocol.

For example, in order use the NR UP protocol, not as a protocol on the GTP-U protocol, but as an independent protocol, the port number that is configured for UDP, or the like, may be used. For example, the NR UP protocol may be conceptually enhanced in order to apply the NR UP protocol for communications other than the communication between the PDCP entity and the counterpart entity including RLC.

In addition, in order to apply for the data transfer during the handover, a new frame format DL FORWARDING USER DATA and a new procedure of DL user data forwarding transfer (Transfer of Downlink Forwarding User Data) may be used. In addition, in order for use as an end marker, a new frame format END MARKER and a new procedure of end marker transfer (Transfer of End Marker) may be used.

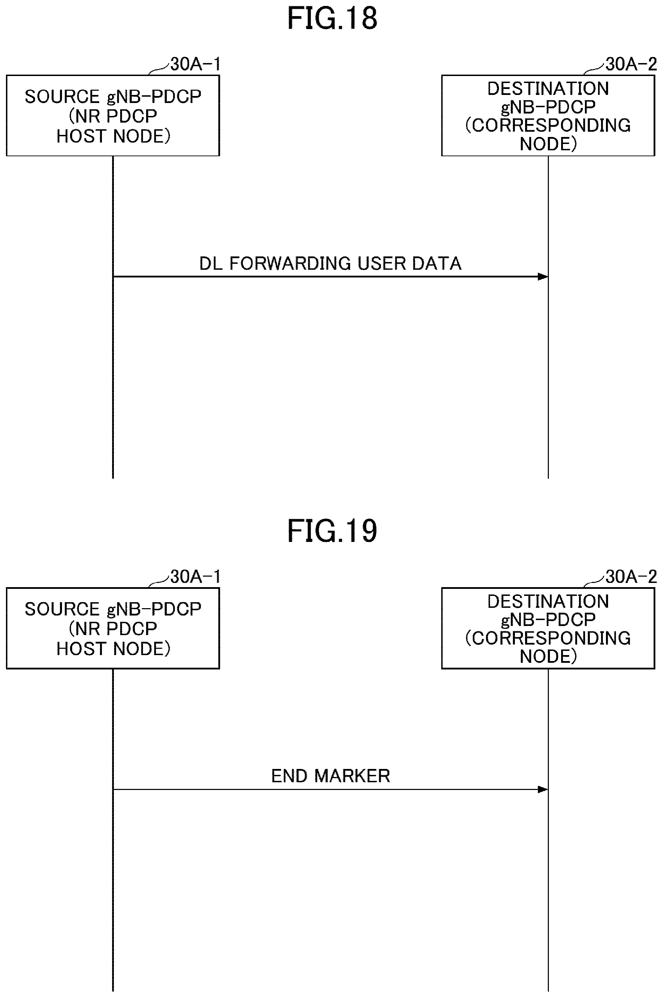

Fig. 18 is a sequence diagram for describing an example (1) of a message in an embodiment of the present invention. Fig. 18 illustrates an example of a new procedure of DL user data forwarding transfer. As illustrated in Fig. 18, the source gNB-PDCP 30A-1 that is an NR PDCP host node (node hosting NR PDCP) may transmit DL FORWARDING USER DATA to the destination gNB-PDCP 30A-2 that is a corresponding node.

Fig. 19 is a sequence diagram for describing an example (2) of a message in an embodiment of the present invention. Fig. 19 illustrates an example of a new procedure of end marker transfer. As illustrated in Fig. 19, the source gNB-PDCP 30A-1 that is an NR PDCP host node may transmit DL FORWARDING USER DATA to the destination gNB-PDCP 30A-2 that is a corresponding node.

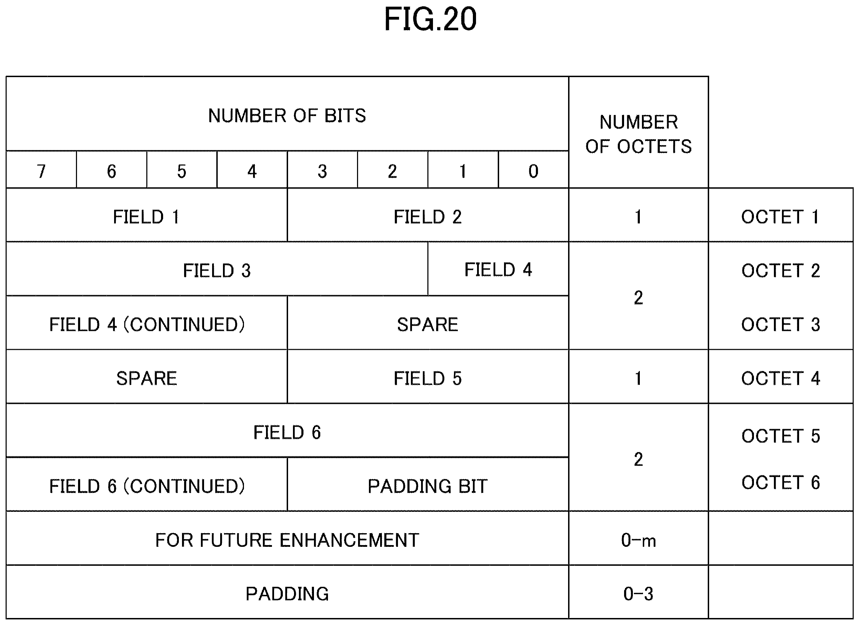

Fig. 20 is a drawing illustrating an example of a frame format in an embodiment of the present invention. Fig. 20 illustrates an example of a frame format of NR UP protocol (refer to Non-Patent Literature 11). As illustrated in Fig. 20, the frame format of NR UP protocol has fields including a plurality of bits. The frame is transmitted from an octet with the smallest number and each octet is transmitted in the descending bit order (the bit position 7 is the top). It is to be noted that spare bits are configured to be 0.

With respect to the new frame format DL FORWARDING USER DATA, in the header, the PDU type value may be 4, and the PDCP SN values for the PDCP SN length of 12 bits, 15 bits, or 18 bits may be included. The payload of DL FORWARDING USER DATA is T-PDU.

With respect to the new frame format END MARKER, in the header, the PDU type value may be 5. The payload of END MARKER is an end marker indication.

It is to be noted that although the destination IP address for UL and the destination IP address for DL are used in the above-described embodiments, the destination for UL and the destination for DL are not limited to IP addresses and may be anything that can be a path selection destination.

According to an embodiment of the present invention, the transport network for N3, Xn-U, or F1-U can be independently developed or can be independently selected by using the generic TN system and performing the generic U-plane path setup procedure. In addition, the NR user plane protocol can be enhanced.

In other words, a generic TN (Transport Network) system can be introduced.

### (Device configuration)

Next, a functional configuration example of the base station 10, network node 30, and the terminal 20 that perform processes and operations described above will be described. The base station 10, the network node 30, and the terminal 20 include functions for implementing the embodiments described above. It should be noted, however, that each of the base station 10, the network node 30, and the terminal 20 may include only some of the functions in the embodiments.

### <Base station 10 and network node 30>

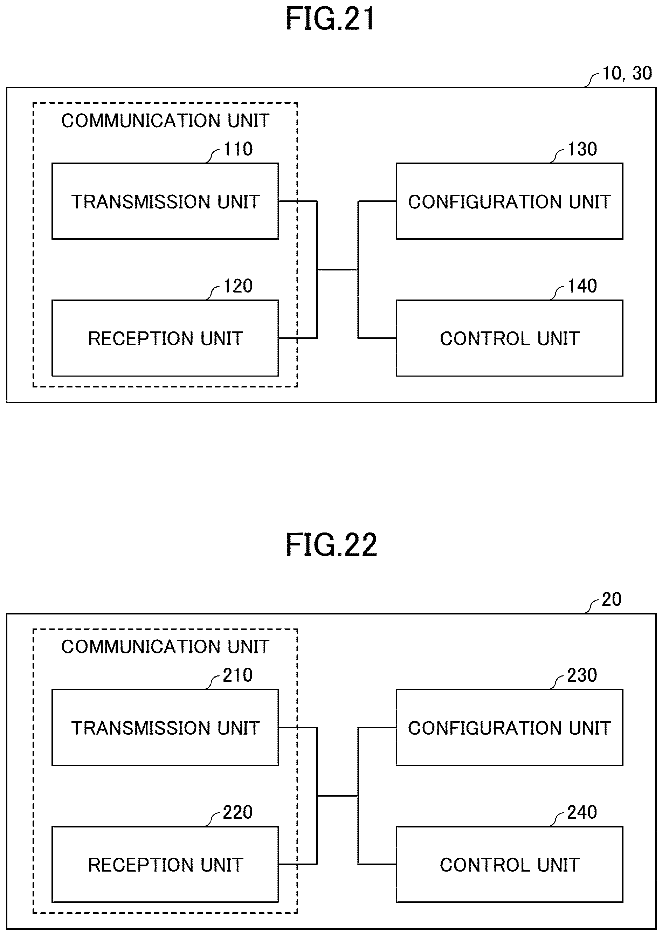

Fig. 21 is a drawing illustrating an example of a functional configuration of the base station 10 and the network node 30. As shown in Fig. 21, the base station 10 includes a transmission unit 110, a reception unit 120, a configuration unit 130, and a control unit 140. The functional configuration illustrated in Fig. 21 is merely an example. Functional divisions and names of functional units may be anything as long as operations according to an embodiment of the present invention can be performed. Note that the network node 30 may have the same functional configuration as the base station 10. In addition, the network nodes 30 having multiple different functions in the system architecture may be composed of multiple network nodes 30 separated for each function.

The transmission unit 110 includes a function for generating a signal to be transmitted to the terminal 20 or to another network node 30 and transmitting the signal in a wired manner or wireless manner. The reception unit 120 includes a function for receiving various signals transmitted from the terminal 20 or another network node 30, and for acquiring, for example, information of an upper layer from the received signals. A communication unit including the transmission unit 110 and the reception unit 120 may be configured.

The configuration unit 130 stores preset configuration information and various configuration information items to be transmitted to the terminal 20 in a storage apparatus and reads the preset configuration information from the storage apparatus as necessary. Contents of the configuration information are, for example, information related to the generic TN system.

The control unit 140 performs a process related to PDCP in the network as described in the embodiments. In addition, the control unit 140 performs a process of communications using the generic TN system. Further, the control unit 140 performs a process related to communications with the terminal 20. The functional units related to signal transmission in the control unit 140 may be included in the transmission unit 110, and the functional units related to signal reception in the control unit 140 may be included in the reception unit 120.

### <Terminal 20>

Fig. 22 is a diagram illustrating an example of a functional configuration of the terminal 20. As shown in Fig. 22, the terminal 20 includes a transmission unit 210, a reception unit 220, a configuration unit 230, and a control unit 240. The functional configuration illustrated in Fig. 22 is merely an example. Functional divisions and names of functional units may be anything as long as operations according to an embodiment of the present invention can be performed. In addition, the communication apparatus that is a resource holder 20 may have a functional configuration similar to the terminal 20.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL control signals or reference signals, and the like, transmitted from the network node 30. A communication unit including the transmission unit 210 and the reception unit 220 may be configured.

The configuration unit 230 stores various types of configuration information received from the network node 30 by the reception unit 220 in the storage device and reads the configuration information from the storage device as necessary. In addition, the configuration unit 230 also stores pre-configured configuration information. Contents of the configuration information are, for example, information related to PDCP.

The control unit 240 performs a process related to PDCP in the network as described in the embodiments. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 21 and Fig. 22) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

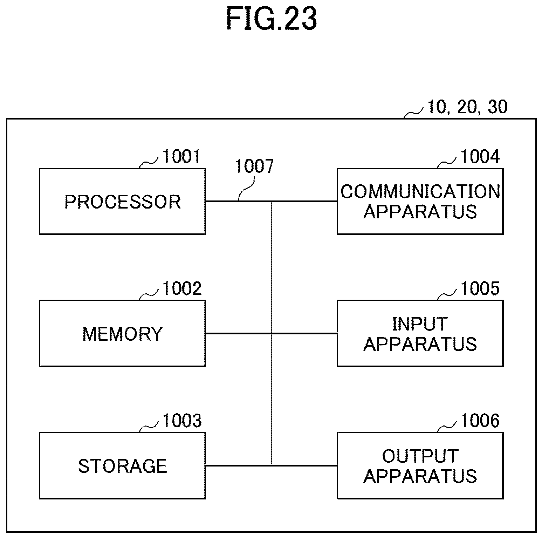

For example, the network node 30, terminal 20, etc., according to an embodiment of the present disclosure may function as a computer for processing the radio communication method of the present disclosure. Fig. 23 is a diagram to show an example of a hardware structure of the base station 10 and the terminal 20 according to one embodiment. The network node 30 may have the same hardware configuration as the base station 10. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 21 may be implemented by control programs that are stored in the memory 1002 and that operate on the processor 1001. In addition, for example, the control unit 240 of the terminal 20 illustrated in Fig. 22 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

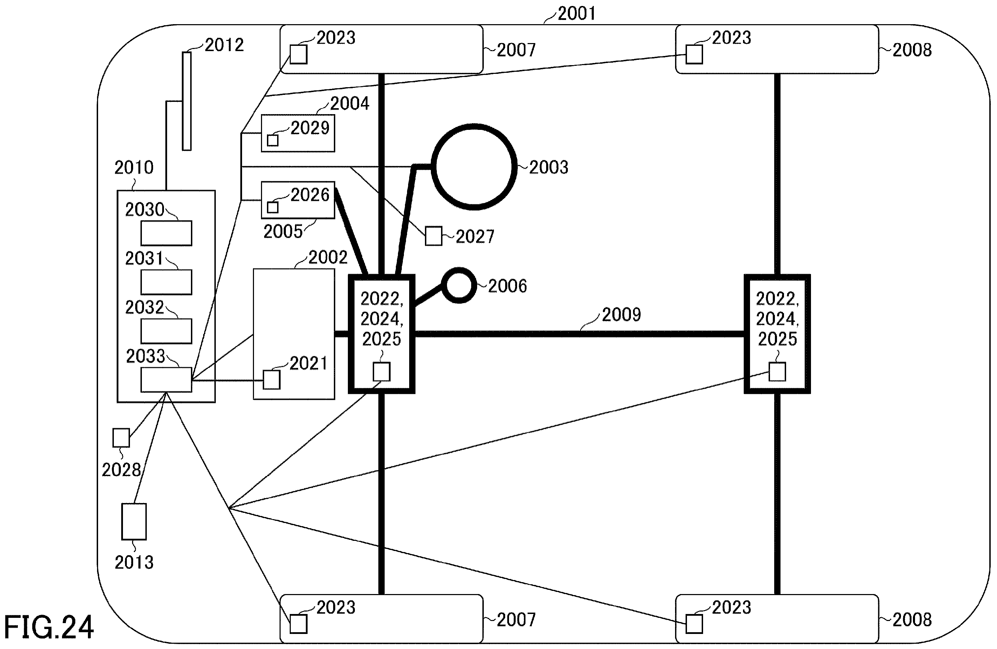

Fig. 24 shows an example of a configuration of a vehicle 2001. As shown in Fig. 24, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a network node is provided. The network node includes: a reception unit configured to receive a PDCP (Packet Data Convergence Protocol) bearer context modification request including information indicating a TN (Transport Network) path setup complete from a first network node during execution of a handover procedure; and a transmission unit configured to transfer user data to a destination of a second network node via the TN path by using a user plane protocol.

According to the above-described configuration, the transport network for N3, Xn-U, or F1-U can be independently developed or can be independently selected by using the generic TN system and performing the generic U-plane path setup procedure. In addition, the NR user plane protocol can be enhanced. In other words, a generic TN (Transport Network) system can be introduced.

The TN path setup complete may indicate that a setup of the TN path between the network node itself and the second network node is completed. According to the above-described configuration, the transport network for N3, Xn-U, or F1-U can be independently developed or can be independently selected by using the generic TN system and performing the generic U-plane path setup procedure.

The reception unit may receive the PDCP bearer context modification request via an SBI (Service Based Interface). According to the above-described configuration, the transport network for N3, Xn-U, or F1-U can be independently developed or can be independently selected by using the generic TN system and performing the generic U-plane path setup procedure.

The transmission unit may transmit an end marker indication to the second network node via the TN path by using the user plane protocol. According to the above-described configuration, the NR user plane protocol can be enhanced.

The TN path may include an APN (All-Photonic Network). According to the above-described configuration, the transport network for N3, Xn-U, or F1-U can be independently developed or can be independently selected by using the generic TN system and performing the generic U-plane path setup procedure.

In addition, according to an embodiment of the present invention, a communication method performed by a network node is provided. The communication method includes: receiving a PDCP (Packet Data Convergence Protocol) bearer context modification request including information indicating a TN (Transport Network) path setup complete from a first network node during execution of a handover procedure; and transferring user data to a destination of a second network node via the TN path by using a user plane protocol.

According to the above-described configuration, the transport network for N3, Xn-U, or F1-U can be independently developed or can be independently selected by using the generic TN system and performing the generic U-plane path setup procedure. In other words, a generic TN (Transport Network) system can be introduced. In addition, the NR user plane protocol can be enhanced.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling), broadcast information (MIB (Master Information Block), SIB (System Information Block)), other signals, or a combination thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Network node
1001 Processor
1002 Memory
1003 Storage
1004 Communication apparatus
1005 Input apparatus
1006 Output apparatus

## Claims

1. A network node comprising:
a reception unit configured to receive a PDCP (Packet Data Convergence Protocol) bearer context modification request including information indicating a TN (Transport Network) path setup complete from a first network node during execution of a handover procedure; and
a transmission unit configured to transfer user data to a destination of a second network node via the TN path by using a user plane protocol.

2. The network node as claimed in claim 1, wherein
the TN path setup complete indicates that a setup of the TN path between the network node itself and the second network node is completed.

3. The network node as claimed in claim 1, wherein
the reception unit receives the PDCP bearer context modification request via an SBI (Service Based Interface).

4. The network node as claimed in claim 1, wherein
the transmission unit transmits an end marker indication to the second network node via the TN path by using the user plane protocol.

5. The network node as claimed in claim 1, wherein
the TN path includes an APN (All-Photonic Network).

6. A communication method performed by a network node, the communication method comprising:
receiving a PDCP (Packet Data Convergence Protocol) bearer context modification request including information indicating a TN (Transport Network) path setup complete from a first network node during execution of a handover procedure; and
transferring user data to a destination of a second network node via the TN path by using a user plane protocol.
